# FASCICULE DE BREVET EUROPEEN

(11) **EP 2 880 285 B1**
(45) Date de publication et mention de la délivrance du brevet: **19.10.2016**
(21) Numéro de dépôt: 13756616.2
(22) Date de dépôt: 29.07.2013
(51) Int. Cl.: F02C 7/22, F02C 7/228, F02C 9/26

(54) **RAMPE D'INJECTION MODULAIRE A DOUBLE CIRCUIT**
MODULARER DOPPELZYKLUS-INJEKTIONSSCHLAUCH
DUAL-CIRCUIT MODULAR INJECTION TUBE

(30) Priorité: 06.08.2012 FR 1257622
(43) Date de publication de la demande: 10.06.2015
(73) Titulaire: TURBOMECA, Société dite:, F-64511 Bordes (FR)
(72) Inventeur: ZORDAN, Cédric, Roger, F-64510 Narcastet (FR); FRANCEZ, Xavier, F-64510 Bordes (FR)
(74) Mandataire: Calvo de Nó, Rodrigo
(86) Numéro de dépôt international: PCT/FR2013/051822
(87) Numéro de publication internationale: WO 2014/023892

(56) Documents cités:
- EP-A2- 1 906 091
- CA-A1- 1 170 844
- GB-A- 2 461 503
- US-A- 3 793 838
- US-A- 5 211 005
- US-A1- 2003 056 578

## Description

### Arrière-plan de l'invention

La présente invention concerne le domaine des turbomachines et plus particulièrement celui des rampes d'injection des turbomachines.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Certaines turbomachines à combustion interne, telles que les turbines de gaz, les turbomoteurs, les turboréacteurs à simple ou double flux, ou les turbopropulseurs, permettent la conversion de l'énergie chimique d'un carburant en énergie mécanique par combustion de ce carburant dans le fluide de travail, opérée dans une chambre de combustion. Typiquement ces turbomachines comportent au moins un compresseur en amont de la chambre de combustion et au moins une turbine, en aval de la chambre de combustion, couplée au compresseur pour son actionnement par une détente partielle du fluide de travail chauffé par la combustion du carburant. Normalement, un restant d'énergie thermique du fluide de travail peut alors être récupéré en tant qu'énergie mécanique par une tuyère de réaction et/ou au moins une turbine supplémentaire couplée à un arbre moteur. Les termes « amont » et « aval » sont définis par rapport au sens de circulation normal du fluide de travail à travers la turbomachine.

Afin d'assurer une combustion homogène dans la chambre de combustion, le carburant y est normalement introduit à travers une pluralité d'injecteurs. Quand la chambre de combustion est annulaire, ces injecteurs sont normalement distribués autour de la chambre de combustion et alimentés en carburant à travers au moins une rampe d'injection.

Lors du démarrage de la turbomachine, afin de pouvoir obtenir au moins localement un mélange suffisamment riche pour permettre l'allumage, même avec un débit total de carburant initialement faible, il peut être nécessaire ou au moins avantageux de restreindre l'alimentation en carburant à uniquement une partie des injecteurs. Toutefois, ceci exige normalement l'assemblage de rampes d'injection plus complexes, incorporant, en parallèle à un circuit principal, un circuit auxiliaire pour le démarrage de la turbomachine. Cette complexité supplémentaire rend la fabrication des rampes d'injection plus difficile et coûteuse et complique également leur entretien.

Le document US 2003/0056578 décrit une rampe d'injection avec circuits parallèles.

### Objet et résumé de l'invention

La présente invention vise à remédier à ces inconvénients et notamment à proposer une rampe d'injection de turbomachine d'assemblage facile qui permette néanmoins l'alimentation sélective en carburant de certains injecteurs à travers un circuit auxiliaire parallèle à un circuit principal. L'homogénéité de la combustion au démarrage étant moins importante que pendant le fonctionnement habituel de la turbomachine, il est possible de limiter l'alimentation de carburant au démarrage à uniquement un premier ensemble d'injecteurs.

Pour cela, une rampe d'injection de turbomachine suivant au moins un mode de réalisation de l'invention selon la revendication 1 comprend un premier ensemble de tubes de transfert raccordés de manière à former un circuit principal pour alimenter en carburant au moins un premier et un deuxième ensembles d'injecteurs, un deuxième ensemble de tubes de transfert raccordés parallèlement au premier ensemble de tubes de transfert de manière à former un circuit auxiliaire pour alimenter en carburant ledit premier ensemble d'injecteurs, au moins un double raccord et au moins un raccord simple. Le double raccord présente au moins un premier embout, dans lequel est reçue une extrémité d'un tube de transfert du circuit principal, un deuxième embout, dans lequel est reçue une extrémité d'un tube de transfert du circuit auxiliaire, et une surface de montage avec un premier orifice en liaison fluide avec le premier embout et un deuxième orifice en liaison fluide avec le deuxième embout, ladite surface de montage du double raccord étant apte à connecter le double raccord à un injecteur dudit premier ensemble di'njecteurs. Le raccord simple présente au moins un premier embout dans lequel est reçue une extrémité d'un tube de transfert du circuit principal, et une surface de montage avec un orifice en liaison fluide avec ce premier embout, ladite surface de montage du raccord simple étant apte à connecter le raccord simple à un injecteur du deuxième ensemble d'injecteurs. En particulier, ledit raccord simple peut ne présenter aucun embout en liaison fluide avec le circuit auxiliaire. Les raccords permettent ainsi un assemblage facile, par simple insertion des extrémités des tubes de transfert dans les embouts correspondants, d'une rampe d'injection avec deux circuits en parallèle, le circuit auxiliaire pouvant ainsi alimenter uniquement les injecteurs du premier ensemble pour le démarrage, tandis que le circuit principal alimente aussi les injecteurs du deuxième ensemble pour mieux distribuer le carburant dans la chambre de combustion aux régimes normaux de fonctionnement de la turbomachine.

Afin notamment de permettre une prolongation du circuit principal, le double raccord peut présenter en outre un troisième embout, dans lequel soit reçue une extrémité d'un deuxième tube de transfert du circuit principal et qui soit aussi en liaison fluide avec le premier orifice.

Afin notamment de permettre une prolongation du circuit principal, ledit raccord simple peut présenter en outre un deuxième embout, dans lequel est reçue une extrémité d'un autre tube de transfert du circuit principal et qui est également en liaison fluide avec l'orifice dans la surface de montage du raccord simple.

Afin notamment de faciliter l'alimentation en carburant du circuit principal, la rampe peut comporter en outre un raccord d'alimentation apte à être connecté à une première source de carburant et présentant au moins un premier embout dans lequel est reçue une extrémité d'un tube de transfert du circuit principal pour son alimentation en carburant à partir de ladite première source. Afin notamment d'augmenter le nombre d'injecteurs tout en limitant le nombre de composants de la rampe, ledit raccord d'alimentation peut comporter aussi une surface de montage avec un orifice en liaison fluide avec le premier embout du raccord d'alimentation, ladite surface de montage du raccord d'alimentation étant apte à connecter le raccord d'alimentation à un injecteur, et notamment à un injecteur dudit deuxième ensemble d'injecteurs, pour son alimentation en carburant à partir de ladite première source. Ledit raccord d'alimentation peut aussi être apte à être connecté à une deuxième source de carburant en parallèle à la première source et présenter aussi au moins un deuxième embout dans lequel soit reçue une extrémité d'un tube de transfert du circuit auxiliaire pour son alimentation en carburant à partir de ladite deuxième source, facilitant notamment de cette manière l'alimentation en carburant du circuit auxiliaire.

La présente invention concerne également une chambre de combustion comprenant une telle rampe d'injection, ainsi qu'une turbomachine comprenant une telle chambre de combustion.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en coupe longitudinale d'une turbomachine ;
- la figure 2A est une vue en perspective d'une rampe d'injection suivant un mode de réalisation de l'invention, connectée à une pluralité d'injecteurs ;
- la figure 2B est un écorché de la rampe d'injection et injecteurs de la figure 2A ;
- les figures 3A et 3B sont une vue de côté et une coupe longitudinale d'un tube de transfert de la rampe d'injection des figures 2A et 2B ;
- les figures 4A, 4B, 4C et 4D sont respectivement des vues du dessus et du dessous, et des coupes suivant les lignes IVC-IVC et IVD-IVD, d'un raccord d'alimentation de la rampe d'injection des figures 2A et 2B ;
- les figures 5A, 5B, 5C et 5D sont respectivement des vues du dessus et du dessous, et des coupes suivant les lignes VC-VC et VD-VD, d'un double raccord de la rampe d'injection des figures 2A et 2B ;
- les figures 6A, 6B, et 6C sont respectivement des vues du dessus et du dessous, et une coupe suivant la ligne VIC-VIC et VID-VID, d'un premier type de raccord simple de la rampe d'injection des figures 2A et 2B ;
- les figures 7A, 7B, et 7C sont respectivement des vues du dessus et du dessous, et une coupe suivant la ligne VIIC-VIIC et VIID-VIID, d'un deuxième type de raccord simple de la rampe d'injection des figures 2A et 2B ; et
- les figures 8A et 8B sont respectivement une vue du haut et une coupe d'un joint d'étanchéité à section en C tel que pouvant être utilisé dans les raccords susmentionnés.

### Description détaillée de l'invention

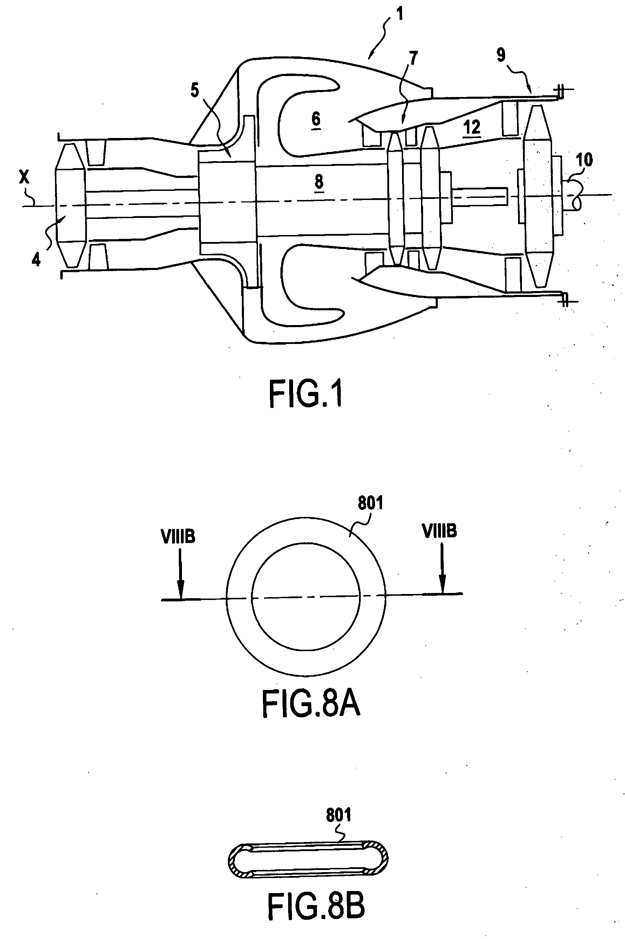

Une turbomachine, plus spécifiquement un turbomoteur 1, est illustrée sur la figure 1. Ce turbomoteur 1 comporte un compresseur axial 4, un compresseur radial 5, une chambre de combustion 6 annulaire, une première turbine à gaz de combustion 7, et un premier arbre rotatif 8, avec un axe central X, et couplant en rotation les roues de la première turbine à gaz de combustion 7 et des compresseurs 4, 5, de telle manière que la rotation de cette dernière serve à actionner les compresseurs 4, 5 pendant le fonctionnement du turbomoteur 1. Le turbomoteur 1 comporte également une deuxième turbine à gaz de combustion 9, ou « turbine libre », et un deuxième arbre rotatif 10, aligné aussi avec l'axe central X et couplant la turbine libre 9 à une sortie de puissance. Ainsi, la rotation de la roue de la turbine libre 9 pendant le fonctionnement du turbomoteur 1 peut servir à actionner un dispositif externe, tel que, par exemple, un rotor d'hélicoptère.

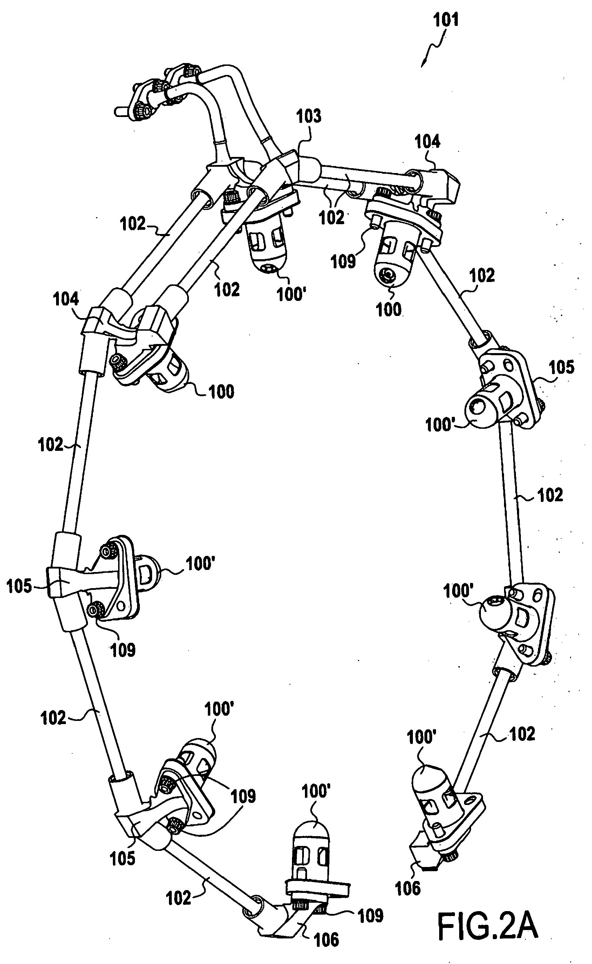

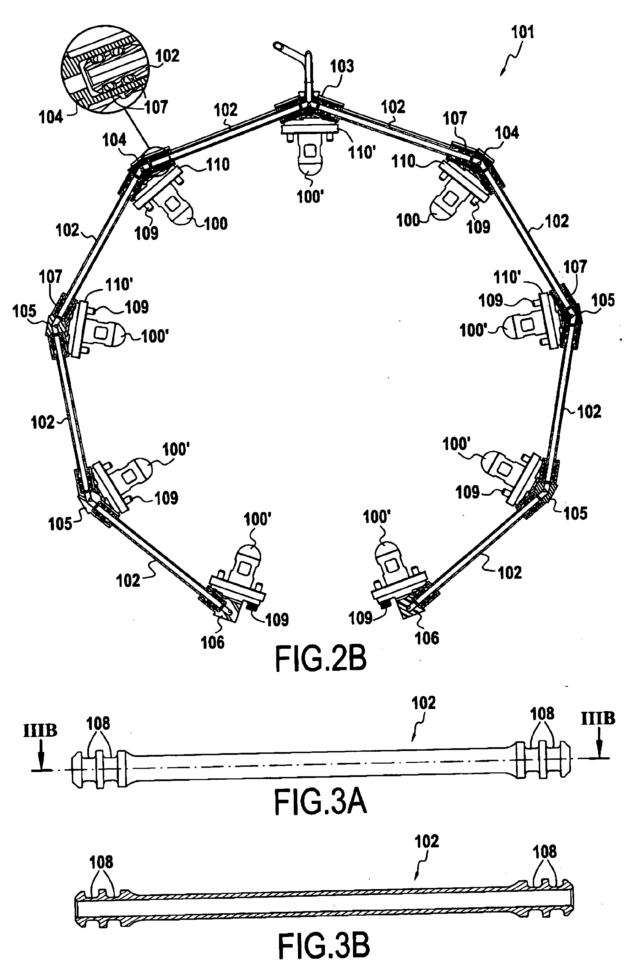

Afin d'injecter du combustible dans la chambre de combustion 6, celle-ci comporte une pluralité d'injecteurs 100,100', distribués tout autour de cette chambre de combustion 6 et connectés à des sources de combustible (non illustrées) par une rampe d'injection 101, comme illustré sur les figures 2A et 2B. Cette pluralité d'injecteurs 100, 100' comprend un premier ensemble d'injecteurs 100 et un deuxième ensemble d'injecteurs 100'. Les injecteurs 100 du premier ensemble sont aptes à injecter, à part un débit de carburant provenant d'une première source de carburant, un débit de carburant provenant d'une deuxième source de carburant, tandis que la rampe 101 ne connecte les injecteurs 100' du deuxième ensemble qu'à la première source de carburant. Pour cela, la rampe d'injection 101 comprend deux circuits de carburant parallèles : un circuit principal reliant la première source de carburant aux injecteurs 100,100' des premier et deuxième ensembles, et un circuit auxiliaire reliant la deuxième source de carburant uniquement aux injecteurs 100 du premier ensemble.

La rampe d'injection 101 est modulaire et comprend une pluralité de tubes de transfert 102 reliés par des raccords 103,104,105,106 de différents types de manière à former lesdits premier et deuxième circuits. Comme illustré en particulier sur la figure 2B, chaque connexion entre un tube de transfert 102 et un raccord 103,104,105 ou 106 s'effectue par simple insertion d'une extrémité du tube de transfert 102 dans un embout correspondant du raccord 103,104,105 ou 106. L'étanchéité de ces connexions est assurée par des joints toriques 107 reçus dans des rainures annulaires 108 des surfaces extérieures des extrémités des tubes de transfert 102, chacun refermant l'espace entre cette surface extérieure et la surface intérieure de l'embout correspondant. Ces rainures 108 sont notamment visibles sur les figures 3A et 3B, dans lesquelles on peut aussi voir comment les extrémités de chaque tube de transfert 102 sont élargies afin de mieux stabiliser le tube de transfert 102. Comme illustré sur les figures 2B et 3B, chaque tube de transfert 102 est creux de manière à permettre l'écoulement du carburant de l'une à l'autre extrémité du tube de transfert 102.

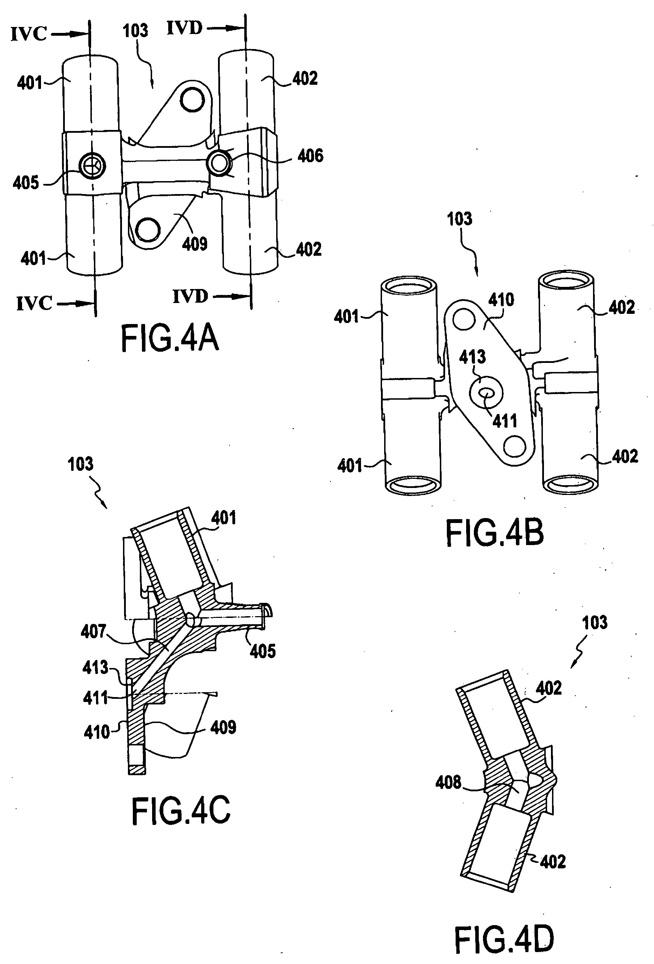

Un premier raccord 103, dit raccord d'alimentation, situé en position centrale dans la rampe 101, est illustré de manière détaillée sur les figures 4A à 4D. Ce raccord d'alimentation 103 comporte des première et deuxième entrées de carburant 405,406 aptes à être connectées, respectivement, auxdites première et deuxième sources de carburant, et présente, de chaque côté, un premier embout 401 dans lequel est reçue une extrémité d'un tube de transfert 102 du circuit principal pour son alimentation en carburant à partir de ladite première source, et un deuxième embout 402 dans lequel est reçue une extrémité d'un tube de transfert 102 du circuit auxiliaire pour son alimentation en carburant à partir de ladite deuxième source. Lesdits premiers embouts 401 sont en communication fluide avec la première entrée de carburant 405 à travers une première cavité 407 du raccord d'alimentation 103 afin d'alimenter en carburant le circuit principal et les deux ensembles d'injecteurs 100,100', tandis que lesdits deuxièmes embouts 402 sont en communication fluide avec la deuxième entrée de carburant 406 à travers une deuxième cavité 408 afin d'alimenter en carburant le circuit auxiliaire et le premier ensemble d'injecteurs 100 en parallèle au circuit principal. Les cavités 407 et 408 sont séparées à l'intérieur du raccord d'alimentation 103 et ne communiquent pas directement entre elles.

En outre, le raccord d'alimentation 103 comporte aussi une bride 409 à sa base. Cette bride 409 permet non seulement de monter le raccord d'alimentation 103 sur une paroi extérieure de la chambre de combustion 6 avec des boulons 109 mais permet aussi le montage d'un injecteur 100' du deuxième ensemble, avec une bride 110' interposée entre la bride 409 du raccord d'alimentation 103 et la paroi extérieure de la chambre de combustion 6. La bride 409 présente une surface de montage 410 avec un orifice 411 en communication fluide avec la première entrée de carburant 405 et lesdits premiers embouts 401 à travers la première cavité 407 du raccord d'alimentation 103. Ainsi, cette surface de montage 410 permet non seulement le montage d'un injecteur 100' dudit deuxième ensemble, mais aussi son alimentation en carburant provenant de la première source de carburant. L'orifice 411 est entouré par un enfoncement local 413 dans la surface de montage 410, permettant le placement d'un joint d'étanchéité à section en C 801, pouvant être par exemple métallique, pour éviter des fuites de carburant entre les brides 409 et 110'. Un tel joint 801 est illustré sur les figures 8A et 8B. Dans le mode de réalisation illustré, cet enfoncement local 410 est formé par un lamage dans la masse du raccord 103. Toutefois, d'autres solutions alternatives sont également envisageables, comme par exemple la réception du joint d'étanchéité dans un orifice plus large formé dans une cale rectifiée interposée entres les brides 409 et 110'.

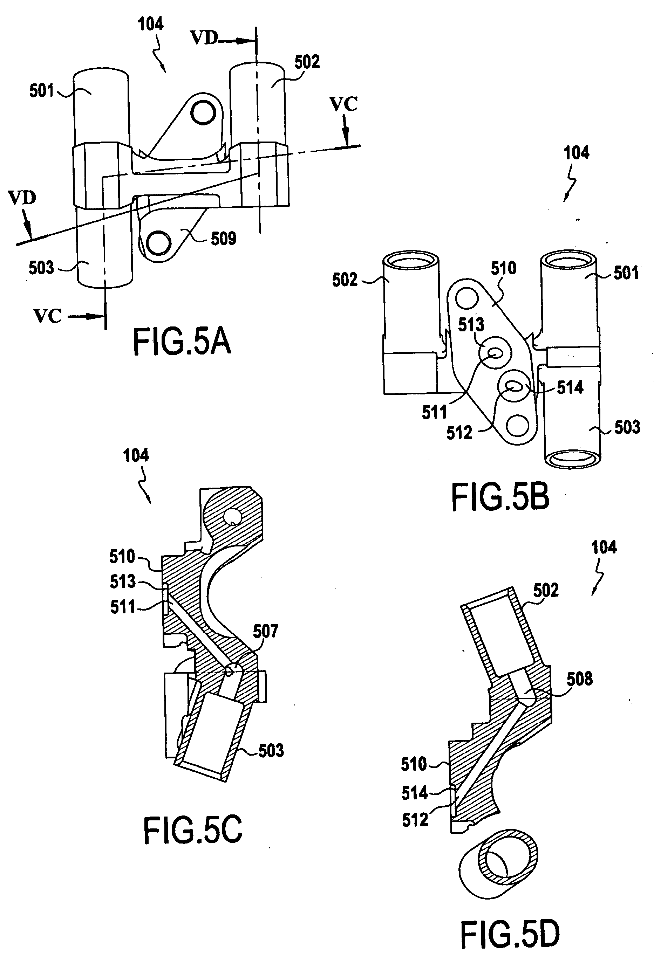

De chaque côté du raccord d'alimentation 103, les extrémités opposées des tubes de transfert 102 directement connectés au raccord d'alimentation 102 sont reçues dans des embouts d'un raccord d'un deuxième type, dit double raccord 104. Un tel double raccord 104 est illustré en plus grand détail sur les figures 5A à 5D. Ce double raccord 104 présente un premier embout 501, un deuxième embout 502 et un troisième embout 503. Le premier embout 501 reçoit l'extrémité de tube de transfert 102 opposée à celle reçue dans un premier embout 401 du raccord d'alimentation 103, tandis que le deuxième embout 502 reçoit l'extrémité de tube de transfert 102 opposée à celle reçue dans un deuxième embout 402 du raccord d'alimentation 103. Le troisième embout 503 est situé d'un côté opposé au premier embout 501 et reçoit une extrémité d'un autre tube de raccord 102 prolongeant le circuit principal au-delà de ce double raccord 104. Pour cela, les premier et troisième embouts 501,503 sont en communication fluide à travers une première cavité 507 du double raccord 104.

En outre, le double raccord 104 comporte aussi une bride 509 à sa base. Cette bride 509 permet non seulement de monter le double raccord 104 sur une paroi extérieure de la chambre de combustion 6 avec des boulons 109 mais permet aussi le montage d'un injecteur 100 du premier ensemble, avec une bride 110 interposée entre la bride 509 du double raccord 104 et la paroi extérieure de la chambre de combustion 6. La bride 509 présente une surface de montage 510 avec un premier orifice 511 en communication fluide avec lesdits premier et troisième embouts 501,503 à travers ladite première cavité 507 du double raccord 104, mais aussi un deuxième orifice 512 en communication fluide avec le deuxième embout 502 à travers une deuxième cavité 508 du double raccord 104. Les cavités 507 et 508 peuvent être séparées à l'intérieur du double raccord 104 et ne pas communiquer directement entre elles. La surface de montage 510 permet donc non seulement le montage d'un injecteur 100 dudit premier ensemble, mais aussi son alimentation en parallèle en carburant provenant des première et deuxième sources de carburant. Les orifices 511,512 sont entourés chacun par un enfoncement local 513,514 dans la surface de montage 510, permettant le placement de joints d'étanchéité à section en C 801 pour éviter des fuites de carburant entre les brides 509 et 110.

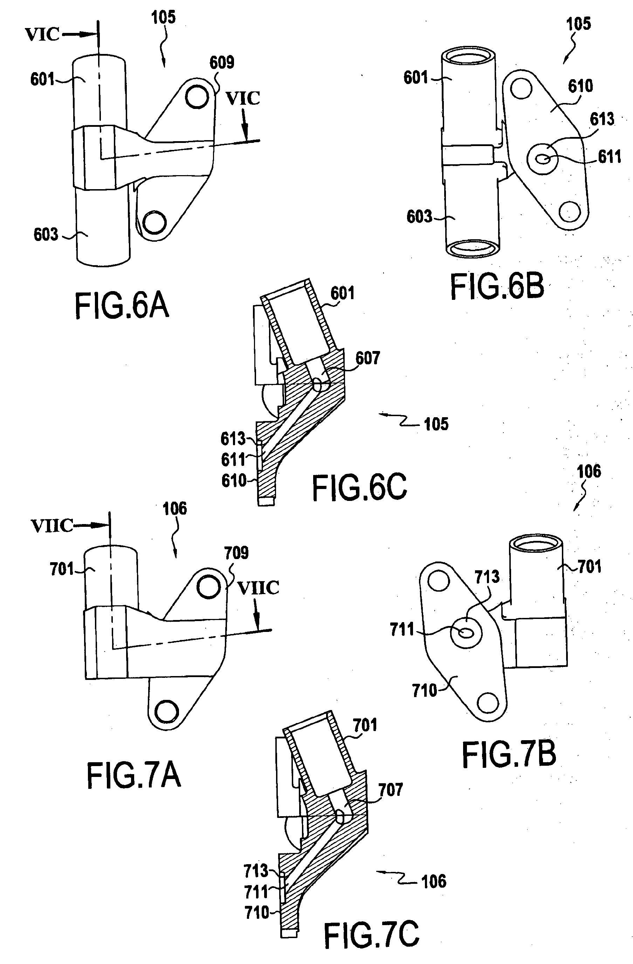

Au-delà des doubles raccords 104, le premier circuit est prolongé par des tubes de transfert 102 successivement connectés par des raccords simples 105. Un tel raccord simple 105 est illustré en plus grand détail sur les figures 6A à 6C. Ce raccord simple 105 présente un premier embout 601 et un deuxième embout 603. Le premier embout 601 reçoit une extrémité de tube de transfert 102 du circuit principal, tandis que le deuxième embout 603, situé d'un côté opposé au premier embout 601, reçoit une extrémité d'un autre tube de transfert 102 du circuit principal. Ces premier et deuxième embouts 601,603 sont en communication fluide à travers une cavité 607 du raccord 105.

En outre, le raccord simple 105 comporte aussi une bride 609 à sa base. Cette bride 609 permet non seulement de monter le raccord simple 105 sur une paroi extérieure de la chambre de combustion 6 avec des boulons 109 mais permet aussi le montage d'un injecteur 100' du deuxième ensemble, avec une bride 110' interposée entre la bride 609 du raccord simple 105 et la paroi extérieure de la chambre de combustion 6. La bride 609 présente une surface de montage 610 avec un orifice 611 en communication fluide avec lesdits premier et deuxième embouts 601, 603 à travers la cavité 607 du raccord simple 105. Ainsi, cette surface de montage 610 permet non seulement le montage d'un injecteur 100' dudit deuxième ensemble, mais aussi son alimentation en carburant provenant de la première source de carburant à travers le circuit principal de la rampe 101. L'orifice 611 est entouré par un enfoncement local 613 dans la surface de montage 610, permettant le placement d'un joint d'étanchéité à section en C (non illustré) pour éviter des fuites de carburant entre les brides 609 et 110'.

La rampe d'injection 101 comprend aussi des raccords simples terminaux 106 formant les extrémités du premier circuit. Un tel raccord simple terminal 106 est illustré en plus grand détail sur les figures 7A à 7C. Ce raccord simple terminal 106 présente un seul embout 701, recevant une extrémité du dernier tube de transfert 102 de chaque côté du circuit principal. En outre, le raccord simple terminal 106 comporte aussi une bride 709 à sa base. Cette bride 709 permet non seulement de monter le raccord simple terminal 106 sur une paroi extérieure de la chambre de combustion 6 avec des boulons 109, mais aussi le montage d'un injecteur 100' du deuxième ensemble, avec une bride 110' interposée entre la bride 709 du raccord simple terminal 106 et la paroi extérieure de la chambre de combustion 6. La bride 709 présente une surface de montage 710 avec un orifice 711 en communication fluide avec ledit premier embout 701 à travers une cavité 707 dans le raccord simple terminal 106. Ainsi, cette surface de montage 710 permet non seulement le montage d'un injecteur 100' dudit deuxième ensemble, mais aussi son alimentation en carburant provenant de la première source de carburant à travers le circuit principal de la rampe 101. L'orifice 711 est entouré par un enfoncement local 713 dans la surface de montage 710, permettant le placement d'un joint d'étanchéité à section en C 801 pour éviter des fuites de carburant entre les brides 709 et 110'.

Il faut bien noter que les doubles raccords 104, raccords simples 105 et raccords simples terminaux 106 de chaque côté du raccord d'alimentation 103 ne sont pas identiques, mais symétriques, à ceux du côté opposé. Ainsi, le double raccord 104 illustré sur les figures 5A à 5D ne représente que le double raccord 104 d'un côté du raccord d'alimentation 103, mais celui du côté opposé y sera sensiblement symétrique. Il en est de même pour le raccord simple 105 représenté sur les figures 6A à 6C et pour le raccord simple terminal 106 représenté sur les figures 7A à 7C.

En fonctionnement, lors du démarrage de la turbomachine 1, un débit de carburant est fourni aux seuls injecteurs 100 du premier ensemble à partir de la deuxième source de carburant et à travers la deuxième entrée de carburant 406 et la deuxième cavité 408 du raccord d'alimentation, les tubes de transfert 102 du circuit auxiliaire et les deuxièmes cavités 508 des raccords doubles 104. Après le démarrage, un débit croissant de carburant sera fourni aux deux ensembles d'injecteurs 100, 100' à partir de la première source de carburant, à travers la première entrée de carburant 405 et la première cavité 407 du raccord d'alimentation 103, les tubes de transfert 102 du circuit principal, les premières cavités 507 des raccords doubles 104, et les raccords simples 105 et simples terminaux 106. Finalement, quand la turbine aura atteint un régime de fonctionnement prédéterminé, chacun des injecteurs 100, 100' injectera un débit sensiblement identique dans la chambre de combustion 6. Ainsi, à ce régime prédéterminé, le débit fourni par les circuits principal et auxiliaire à chacun des injecteurs 100 du premier ensemble sera sensiblement identique au débit fourni par le circuit à chacun des injecteurs 100' du deuxième ensemble.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Rampe d'injection (101) de turbomachine comprenant :
un premier ensemble de tubes de transfert (102) raccordés de manière à former un circuit principal pour alimenter en carburant au moins un premier ensemble et un deuxième ensemble d'injecteurs (100,100');
un deuxième ensemble de tubes de transfert (102) raccordés parallèlement au premier ensemble de manière à former un circuit auxiliaire pour alimenter en carburant ledit premier ensemble d'injecteurs (100) ; et
au moins un double raccord (104) présentant au moins un premier embout (501), dans lequel est reçue une extrémité d'un tube de transfert (102) du circuit principal, un deuxième embout (502), dans lequel est reçue une extrémité d'un tube de transfert (502) du circuit auxiliaire, et une surface de montage (510) avec un premier orifice (511) en liaison fluide avec le premier embout (501) et un deuxième orifice (512) en liaison fluide avec le deuxième embout (502), ladite surface de montage (510) du double raccord (104) étant apte à connecter le double raccord (104) à un injecteur dudit premier ensemble d'injecteurs (100) ; et **caractérisée en ce qu'**elle comprend en outre au moins un raccord simple (105,106) présentant au moins un premier embout (601,701), dans lequel est reçue une extrémité d'un tube de transfert (102) du circuit principal, et une surface de montage (610,710) avec un orifice (611,711) en liaison fluide avec ce premier embout (601,701), ladite surface de montage (610,710) du raccord simple (105,106) étant apte à connecter le raccord simple à un injecteur (100') dudit deuxième ensemble d'injecteurs (100').

2. Rampe d'injection (101) suivant la revendication 1, dans lequel le raccord simple (105,106) ne présente aucun embout en liaison fluide avec le circuit auxiliaire.

3. Rampe d'injection (101) suivant l'une quelconque des revendications 1 ou 2, dans lequel le double raccord (104) présente en outre un troisième embout (503), dans lequel est reçue une extrémité d'un deuxième tube de transfert (102) du circuit principal et qui est aussi en liaison fluide avec le premier orifice (511).

4. Rampe d'injection (101) suivant l'une quelconque des revendications précédentes, dans lequel ledit raccord simple (105) présente en outre un deuxième embout (603), dans lequel est reçue une extrémité d'un autre tube de transfert (102) du circuit principal et qui est également en liaison fluide avec l'orifice (611) dans la surface de montage (610) du raccord simple (105).

5. Rampe d'injection (101) suivant l'une quelconque des revendications 1 à 4, comportant en outre un raccord d'alimentation (103) apte à être connecté à une première source de carburant et présentant au moins un premier embout (401) dans lequel est reçue une extrémité d'un tube de transfert (102) du circuit principal pour son alimentation en carburant à partir de ladite première source.

6. Rampe d'injection (101) suivant la revendication 5, dans lequel ledit raccord d'alimentation (103) comporte aussi une surface de montage (410) avec un orifice (411) en liaison fluide avec le premier embout (401) du raccord d'alimentation (103), ladite surface de montage (410) du raccord d'alimentation (103) étant apte à connecter le raccord d'alimentation (103) à un injecteur (100') dudit deuxième ensemble d'injecteurs (100') pour son alimentation en carburant à partir de ladite première source.

7. Rampe d'injection (101) suivant l'une quelconque des revendications 5 ou 6, dans lequel ledit raccord d'alimentation (103) est aussi apte à être connecté à une deuxième source de carburant en parallèle à la première source et présente aussi au moins un deuxième embout (402) dans lequel est reçue une extrémité d'un tube de transfert (102) du circuit auxiliaire pour son alimentation en carburant à partir de ladite deuxième source.

8. Chambre de combustion (6) de turbomachine comportant une rampe d'injection (101) suivant l'une quelconque des revendications précédentes.

9. Turbomachine (1) comportant une chambre de combustion suivant la revendication 8.

## Patentansprüche

1. Einspritzverteiler (101) einer Turbomaschine, umfassend:
eine erste Anordnung von Übertragungsrohren (102), die derart angeschlossen sind, dass sie einen Hauptkreis zur Treibstoffversorgung wenigstens einer ersten Anordnung und einer zweiten Anordnung von Einspritzdüsen (100, 100') bilden,
eine zweite Anordnung von Übertragungsrohren (102), die parallel zu der ersten Anordnung angeschlossen sind, so dass sie einen Hilfskreis für die Treibstoffversorgung der ersten Anordnung von Einspritzdüsen (100) bilden, und
wenigstens ein Doppelverbindungsstück (104), das wenigstens ein erstes Anschlussstück (501), in dem ein Ende eines Übertragungsrohrs (102) des Hauptkreises aufgenommen ist, ein zweites Anschlussstück (502), in dem ein Ende eines Übertragungsrohrs (102) des Hilfskreises aufgenommen ist, und eine Montagefläche (510) mit einer ersten Öffnung (511) in Fluidverbindung mit dem ersten Anschlussstück (501) und einer zweiten Öffnung (512) in Fluidverbindung mit dem zweiten Anschlussstück (502) aufweist, wobei die Montagefläche (510) des Doppelverbindungsstücks (104) geeignet ist, das Doppelverbindungsstück (104) an eine Einspritzdüse der ersten Anordnung von Einspritzdüsen (100) anzuschließen, und **dadurch gekennzeichnet, dass** er ferner wenigstens ein einfaches Verbindungsstück (105, 106) umfasst, das wenigstens ein erstes Anschlussstück (601, 701), in dem ein Ende eines Übertragungsrohrs (102) des Hauptkreises aufgenommen ist, und eine Montagefläche (610, 710) mit einer Öffnung (611, 711) in Fluidverbindung mit diesem ersten Anschlussstück (601, 701) aufweist, wobei die Montagefläche (610, 710) des einfachen Verbindungsstücks (105, 106) geeignet ist, das einfache Verbindungsstück an eine Einspritzdüse (100') der zweiten Anordnung von Einspritzdüsen (100') anzuschließen.

2. Einspritzverteiler (101) nach Anspruch 1, bei dem das einfache Verbindungsstück (105, 106) kein mit dem Hilfskreis in Fluidverbindung stehendes Anschlussstück aufweist.

3. Einspritzverteiler (101) nach einem der Ansprüche 1 oder 2, bei dem das Doppelverbindungsstück (104) ferner ein drittes Anschlussstück (503) aufweist, in dem ein Ende eines zweiten Übertragungsrohrs (102) des Hauptkreises aufgenommen ist und das auch mit der ersten Öffnung (511) in Fluidverbindung steht.

4. Einspritzverteiler (101) nach einem der vorhergehenden Ansprüche, bei dem das einfache Verbindungsstück (105) ferner ein zweites Anschlussstück (603) aufweist, in dem ein Ende eines weiteren Übertragungsrohrs (102) des Hauptkreises aufgenommen ist und das ebenfalls mit der Öffnung (611) in der Montagefläche (610) des einfachen Verbindungsstücks (105) in Fluidverbindung steht.

5. Einspritzverteiler (101) nach einem der Ansprüche 1 bis 4, ferner umfassend einen Versorgungsanschluss (103), der geeignet ist, an eine erste Treibstoffquelle angeschlossen zu werden, und der wenigstens ein erstes Anschlussstück (401) aufweist, in dem ein Ende eines Übertragungsrohrs (102) des Hauptkreises für dessen Versorgung mit Treibstoff aus der ersten Quelle aufgenommen ist.

6. Einspritzverteiler (101) nach Anspruch 5, bei dem der Versorgungsanschluss (103) auch eine Montagefläche (410) mit einer Öffnung (411) in Fluidverbindung mit dem ersten Anschlussstück (401) des Versorgungsanschlusses (103) umfasst, wobei die Montagefläche (410) des Versorgungsanschlusses (103) geeignet ist, den Versorgungsanschluss (103) an eine Einspritzdüse (100') der zweiten Anordnung von Einspritzdüsen (100') für deren Beaufschlagung mit Treibstoff aus der ersten Quelle anzuschließen.

7. Einspritzverteiler (101) nach einem der Ansprüche 5 oder 6, bei dem der Versorgungsanschluss (103) auch geeignet ist, an eine zweite Treibstoffquelle parallel zu der ersten Quelle angeschlossen zu werden, und auch wenigstens ein zweites Anschlussstück (402) aufweist, in dem ein Ende eines Übertragungsrohrs (102) des Hilfskreises für dessen Versorgung mit Treibstoff aus der zweiten Quelle aufgenommen ist.

8. Brennkammer (6) einer Turbomaschine, die einen Einspritzverteiler (101) nach einem der vorhergehenden Ansprüche umfasst.

9. Turbomaschine (1), die eine Brennkammer nach Anspruch 8 umfasst.

## Claims

1. An injection manifold assembly (101) for a turbomachine, comprising:
a first set of transfer tubes (102) connected so as to form a main circuit for feeding fuel to at least a first set and a second set of injectors (100, 100');
a second set of transfer tubes (102) connected in parallel with the first set so as to form an auxiliary circuit for feeding fuel to said first set of injectors (100); and
at least one double coupling (104) presenting at least one first endpiece (501) receiving one end of a transfer tube (102) of the main circuit, a second endpiece (502) receiving one end of a transfer tube (502) of the auxiliary circuit, and a mounting surface (510) with a first orifice (511) in fluid flow communication with the first endpiece (501) and a second orifice (512) in fluid flow communication with the second endpiece (502), said mounting surface (510) of the double coupling (104) being suitable for connecting the double coupling (104) to an injector of said first set of injectors (100);
the manifold assembly being **characterized in that** it further comprises at least one single coupling (105, 106) presenting at least a first endpiece (601, 701) receiving one end of a transfer tube (102) of the main circuit, and a mounting surface (610, 710) with an orifice (611, 711) in fluid flow communication with the first endpiece (601, 701), said mounting surface (610, 710) of the single coupling (105, 106) being suitable for connecting the single coupling to an injector (100') of said second set of injectors (100').

2. An injection manifold assembly (101) according to claim 1, wherein the single coupling (105, 106) does not present any endpiece in fluid flow communication with the auxiliary circuit.

3. An injection manifold assembly (101) according to claim 1 or claim 2, wherein the double coupling (104) also presents a third endpiece (503) receiving one end of a second transfer tube (102) of the main circuit and also in fluid flow communication with the first orifice (511).

4. An injection manifold assembly (101) according to any preceding claim, wherein said single coupling (105) also presents a second endpiece (603), receiving one end of another transfer tube (102) of the main circuit and also in fluid flow communication with the orifice (611) in the mounting surface (610) of the single coupling (105).

5. An injection manifold assembly (101) according to any one of claims 1 to 4, further including a feed coupling (103) suitable for being connected to a first source of fuel and presenting at least a first endpiece (401) receiving one end of a transfer tube (102) of the main circuit for feeding it with fuel from said first source.

6. An injection manifold assembly (101) according to claim 5, wherein said feed coupling (103) also includes a mounting surface (410) with an orifice (411) in fluid flow communication with the first endpiece (401) of the feed coupling (103), said mounting surface (410) of the feed coupling (103) being suitable for connecting the feed coupling (103) to an injector (100') of said second set of injectors (100') for feeding it with fuel from said first source.

7. An injection manifold assembly (101) according to claim 5 or claim 6, wherein said feed coupling (103) is also suitable for being connected to a second source of fuel in parallel with the first source and also presents at least one second endpiece (402) receiving one end of a transfer tube (102) of the auxiliary circuit for feeding it with fuel from said second source.

8. A turbomachine combustion chamber (6) including an injection manifold assembly (101) according to any preceding claim.

9. A turbomachine (1) including a combustion chamber according to claim 8.
